# EUROPÄISCHE PATENTSCHRIFT

(11) **EP 0 988 586 B1**
(45) Veröffentlichungstag und Bekanntmachung des Hinweises auf die Patenterteilung: **06.02.2008**
(21) Anmeldenummer: 99945698.1
(22) Anmeldetag: 07.04.1999
(51) Int. Cl.: G06F 1/20

(54) **VORRICHTUNG ZUR KÜHLUNG EINES IN EINEM GEHÄUSE UNTERGEBRACHTEN PERSONAL COMPUTERS**
DEVICE FOR COOLING A PERSONAL COMPUTER HOUSED IN A CASING
DISPOSITIF POUR LE REFROIDISSEMENT D'UN ORDINATEUR PERSONNEL LOGE DANS UN BOITIER

(30) Priorität: 08.04.1998 DE 19815871
(43) Veröffentlichungstag der Anmeldung: 29.03.2000
(73) Patentinhaber: Fujitsu Siemens Computers GmbH, 80807 München (DE)
(72) Erfinder: BREIER, Anton, D-86316 Friedberg (DE); LUPLOW, Werner, D-86438 Kissing (DE); RIEBEL, Michael, D-86438 Kissing (DE); SCHRÖDER, Stefan, D-86157 Augsburg (DE)
(74) Vertreter: Epping - Hermann - Fischer
(86) Internationale Anmeldenummer: PCT/DE1999/001038
(87) Internationale Veröffentlichungsnummer: WO 1999/053392

(56) Entgegenhaltungen:
- WO-A-95/32457
- DE-A- 3 121 906
- DE-U- 9 403 364
- DE-U- 29 823 495
- US-A- 4 505 394
- US-A- 5 036 481
- US-A- 5 414 591
- US-A- 5 424 913
- US-A- 5 457 602
- US-A- 5 712 762
- PATENT ABSTRACTS OF JAPAN vol. 017, no. 188 (E-1349), 13. April 1993 (1993-04-13) & JP 04 335597 A (MATSUSHITA ELECTRIC IND CO LTD), 24. November 1992 (1992-11-24)
- PATENT ABSTRACTS OF JAPAN vol. 017, no. 405 (P-1581), 28. Juli 1993 (1993-07-28) & JP 05 073175 A (HITACHI LTD), 26. März 1993 (1993-03-26)

## Beschreibung

Die Erfindung bezieht sich auf eine Vorrichtung gemäß dem Oberbegriff des Patentanspruchs 1.

Aufgrund der Wärmeentwicklung ihrer Komponenten sind Personal Computer mit Kühlmaßnahmen auszustatten. Besonders wärmekritische Komponenten sind der Mikroprozessor-Modul, die Laufwerke, die Stromversorgungsbaugruppe und Erweiterungbaugruppen, die zumeist in Form von Steckkarten ausgebildet sind. In heute üblicher Weise werden das Gehäuseinnere des Personal Computers und insbesondere die kritischen PC-Komponenten durch einen oder mehrere jeweils durch einen Elektromotor angetriebene Lüfter aktiv zwangsbelüftet und damit für einen Betrieb des Computers ausreichend gekühlt.

Die eingesetzten Lüfter bringen jedoch gewisse Nachteile mit sich. Aufgrund des mechanischen Verschleißes und der Blokkiermöglichkeit der drehenden Teile besteht stets eine erhebliche Ausfallgefahr, der manchmal durch zusätzlich vorgesehene Alarmeinrichtungen begegnet wird.

Bei Ausfall eines Lüfters muß dieser entweder repariert oder ersetzt werden, was einen Serviceaufwand erfordert, ganz abgesehen davon, daß bereits der Einbau eines oder mehrerer Lüfter einen beträchtlichen Kostenaufwand mit sich bringt. Außerdem benötigen die im Computer vorgesehenen Lüfter zusätzlichen Raum innerhalb des Gehäuses, wodurch ein insgesamt größerer Raumbedarf des Personal Computers verursacht wird.

Schließlich besteht ein Nachteil der Anwendung von motorisch angetriebenen Lüftern zur Kühlung im Computer auch darin, daß ein beachtlicher Geräuschpegel erzeugt wird, der die unmittelbare Arbeit am Computer negativ beeinflußt und darüber hinaus auch die Tätigkeiten in Räumen, in denen sich ein oder mehrere PCs befinden, erschwert und stört.

Der Erfindung liegt daher die Aufgabe zugrunde, Maßnahmen zur Kühlung eines Personal Computers und insbesondere von dessen wärmekritischen Komponenten wie dem Mikroprozessor-Modul, den Laufwerken, der Stromversorgung und Erweiterungsbaugruppen anzugeben, so daß bestimmte Randbedingungen eingehalten werden, nämlich die Realisierbarkeit der Kühlmaßnahmen in beliebigen PC-Gehäusen, insbesondere in flachen Desktops, eine Minimierung des Geräuschpegels, eine Maximierung der Ausfallsicherheit und eine ausreichende Kühlleistung für Hochleistungs-Mikroprozessoren bis zu etwa 50 Watt.

Die gestellte Aufgabe wird bei einer gattungsgemäßen Vorrichtung durch die Merkmale im kennzeichnenden Teil des Patentanspruchs 1 gelöst.

Eine Vorrichtung gemäß Anspruch 1 bewirkt eine passive Kühlung durch Wärmeleitung, Konvektion und Kamineffekte. Die Erfindung besteht in einer Merkmalskombination, die den Systementwurf in verschiedenen Punkten bestimmt.

Die angegebene Plazierung des Mikroplrozessor-Moduls an eine definierten Stelle auf der Systembaugruppe, vorzugsweise am Rand dieser Baugruppe, ist nicht trivial und nicht mit Lösungen aus der Verstärker- oder Stromversorgungstechnik vergleichbar, da der Prozessor über einige hundert hochfrequente Signale angeschlossen und betrieben wird.

Gegenüber den heute bei PCs realisierten Kühlvorrichtungen mit einem oder mehreren Lüftern ergeben sich durch die Maßnahmen gemäß der Erfindung wesentliche Vorteile. Die Ausfallsicherheit wird beträchtlich gesteigert, da ein mechanischer Verschleiß und ein Blockieren drehender Teile entfällt. Der technische und kostenmäßige Kühlaufwand für einen Personal Computer wird verringert, da eine Ausstattung mit Lüftern entfällt.

Auch der Serviceaufwand während der Lebensdauer eines Computers wird stark vermindert, da keine Lüfterausfälle mit deren schwerwiegenden Konsequenzen mehr eintreten können. Bezüglich des durch den Personal Computer erzeugten Lärms, ergibt sich durch die Anwendung der durch die Erfindung angegebenen Maßnahmen eine deutliche Reduzierung des Lärmpegels, da keine Motoren- und Luftbewegungsgeräusche erzeugenden Lüfter mehr erforderlich sind.

US 4 505 394 A (REIMER WILLIAM A) 19. März 1985 (1985-03-19) zeigt eine Vorrichtung in der elektrische Baugruppen auf Stützvorrichtungen ruhen, welche gekippt werden können um Konvektionskühlung zu erzeugen.

Bei der Vorrichtung nach der Erfindung werden also in der PC-Technik bisher unbekannte Kühlmöglichkeiten eingesetzt. Die Kühlwirkung wird unter den Randbedingungen eines möglichen niedrigen Desktop-Gehäuses, einer minimalen Schallentwicklung sowie einer maximalen Lebensdauer und Ausfallsicherheit des Personal Computers optimiert.

Zweckmäßige und vorteilhafte Weiterbildungen der Vorrichtung nach der Erfindung sind in den Unteransprüchen angegeben.

Die Erfindung wird im folgenden anhand eines in drei Figuren dargestellten Ausführungsbeispiels erläutert.

Es zeigen:
FIG. 1 eine schematische Draufsicht auf das Innere eines entsprechend der Erfindung gekühlten Personal Computers,
FIG. 2 eine schematische, nicht maßstabsgetreue Seitenansicht desjenigen Teils des Inneren des in FIG. 1 dargestellten Computers, der für die Kühlung der Erweiterungsbaugruppen zuständig ist, und
FIG. 3 eine entsprechende Seitenansicht desjenigen Teils des Inneren dieses Computers, der für die Kühlung der Laufwerke und der Stromversorgungsbaugruppe zuständig ist.

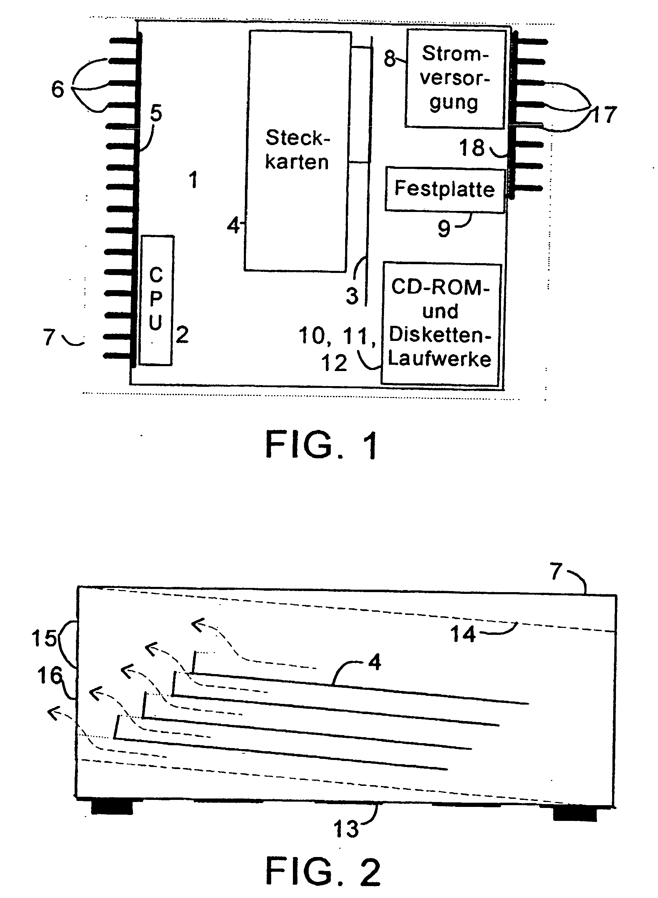

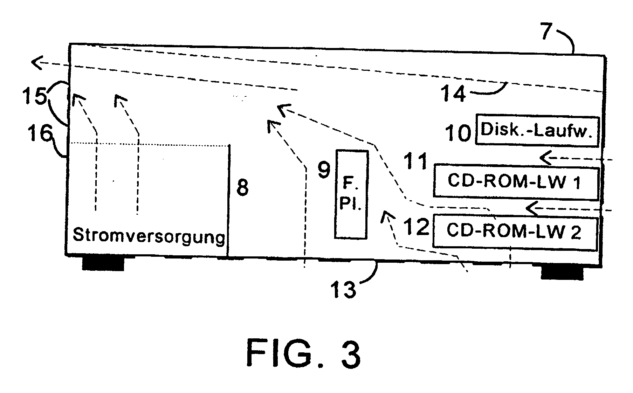

Der in FIG. 1 dargestellte Personal Computer weist auf einer über einem Gehäuseboden 13 (sichtbar in FIG. 2 und 3) angeordneten Systembaugruppe (Motherboard) 1 einen Mikroprozessor-Modul 2 und eine Steckkarten-Aufnahmeplatine (Platter) 3 auf, in die als Steckkarten ausgebildete Erweiterungsbaugruppen 4, z.B. ein Graphikadapter und eine Soundkarte, eingesteckt sind.

Der mit der Systembaugruppe 1 über einige hunderte Signale verbundene Mikroprozessor-Modul 2 ist an einer definierten Stelle dieser Systembaugruppe 1, nämlich am Rand angebracht, um eine direkte wärmeleitende Verbindung vom Mikroprozessor-Modul 2 zu einem Kühlkörper 5 herzustellen. Der Kühlkörper 5 ist zu diesem Zweck mit einer Vielzahl von nach außen abstehenden Kühlrippen 6 oder entsprechenden zur Wärmeabgabe optimierten Oberflächen versehen. -

Der Kühlkörper 5 kann eine Außenwand des Gehäuses bilden oder unter einer den Computer abdeckenden Abdeckhaube 7 liegen. Im Gehäuse des Computers sind noch eine Stromversorgungsbaugruppe 8, ein Festplattenlaufwerk 9 und ein Diskettenlaufwerk 10 sowie CD-ROM-Laufwerke 11 und 12 angeordnet.

Wie in FIG. 2 und/oder 3 in Verbindung mit FIG. 1 zu erkennen ist, weist der Gehäuseboden 13 Perforationen auf. Ein Gehäusedeckel 14 ist in Form einer schiefen Ebene unter ca. 10° gegenüber der Horizontalen schräggestellt angeordnet. Dadurch wird eine in FIG. 3 zu erkennende Luftströmung erzeugt, die vom Gehäuseboden 13 ansteigend das Gerät durch Öffnungen 15 in einer Gehäusewand 16 oder in der Abdeckhaube 7 verläßt. Die Luftströmung ist durch Pfeile angedeutet.

Die Steckplätze der Erweiterungsbaugruppen 4 in der Steckkarten-Aufnahmeplatine 3 sind schräggestellt angeordnet, so daß die als Steckkarten ausgeführten Erweiterungsbaugruppen 4 in schiefen Ebenen verlaufen. Durch die Schrägstellung der Erweiterungsbaugruppen 4 wird eine hinsichtlich ihres Verlaufs durch Pfeile in FIG. 2 gezeigte Luftströmung erzeugt, die vom perforierten Gehäuseboden 13 ausgeht, zwischen den Erweiterungsbaugruppen 4 sowie über der Systembaugruppe 1 aufsteigt und das Gerät an den geeignet angebrachten Öffnungen 15 der Gehäusewand 16 bzw. der Abdeckhaube 7 verläßt.

Die schiefen Ebenen, in denen die Erweiterungsbaugruppen 4 liegen, verlaufen parallel zueinander oder zumindest annähernd parallel zum Gehäusedeckel 14, so daß die Luftströmung zwischen diesen Elementen weitgehend wirbelfrei zu den Geräteöffnungen 15 geleitet wird.

Wie FIG. 3 zeigt, sind das Festplattenlaufwerk 9 und das CD-ROM-Laufwerk 12 im Gesamtluftstrom und das CD-ROM-Laufwerk 11 sowie das Diskettenlaufwerk 10 teilweise im Gesamtluftstrom und außerdem jeweils in einem seitlich herkommenden Zuluft-Kanal angeordnet, so daß jedes einzelne der Laufwerke 9 bis 12 mit Hilfe des Hauptluftstromes und teilweise mit Hilfe von Zuluft-Kanälen ausreichend Luft erhält. Das Festplattenlaufwerk 9 ist zur optimalen Kühlung vorzugsweise senkrecht gestellt angeordnet und kann zur Erzielung einer besseren Schalldämmung gekapselt ausgeführt werden.

Die Kühlung der Stromversorgungsbaugruppe 8 erfolgt durch eine Anordnung der Leistungsbauteile auf einem mit seitlich nach außen abstehenden Kühlrippen 17 versehenen Kühlkörper 18 sowie durch den Luftstrom, der durch die Perforation des Gehäusebodens 13 und die Schrägstellung des Gehäusedeckels 14 erzeugt wird und das Gerät an den geeignet angebrachten Öffnungen 15 verläßt. Der Kühlkörper 18 bildet genauso wie der Kühlkörper 5 entweder eine seitliche Außenwand des Gehäuses oder liegt unter der Abdeckhaube 7, wobei sie jeweils über Kanäle und Austrittsöffnungen belüftet werden.

## Patentansprüche

1. Vorrichtung zur Kühlung eines in einem Gehäuse untergebrachten Personal Computers, der in üblicher Weise eine Systembaugruppe (Motherboard), ein auf der Systembaugruppe angebrachtes und dort angeschlossenes Mikroprozessor-Modul, Laufwerke, eine Stromversorgungsbaugruppe und in Form von Steckkarten ausgebildete Erweiterungsbaugruppen enthält,
**dadurch gekennzeichnet, daß**
- dem Mikroprozessor-Modul (2) auf der Systembaugruppe (1) definiert ein solcher Platz zugewiesen ist, daß eine wärmeleitende Verbindung vom Mikroprozessor-Modul zu einem Kühlkörper (5) herstellbar ist,
- die Leistungsbauteile der Stromversorgungsbaugruppe (8) auf einem Kühlkörper (18) angeordnet sind und
- die Kühlkörper (5, 18) zumindest teilweise jeweils Bestandteil einer Außenwand des Gehäuses sind.

2. Vorrichtung nach Anspruch 1, **dadurch gekennzeichnet, daß** das Mikroprozessor-Modul (2) am Rand der Systembaugruppe (1) angeordnet ist.

3. Vorrichtung nach Anspruch 1 oder 2, **dadurch gekennzeichnet, daß** die wärmeleitende Verbindung vom Mikroprozessor-Modul (2) zum Kühlkörper (5) eine direkte Verbindung ist.

4. Vorrichtung nach Anspruch 1 oder 2, **dadurch gekennzeichnet, daß** die wärmeleitende Verbindung vom Mikroprozessor-Modul (2) zum Kühlkörper (5) durch ein Wärmeübertragungsrohr (Heatpipe) gebildet ist.

5. Vorrichtung nach einem der Ansprüche 1 bis 4, **dadurch gekennzeichnet, daß** die Kühlkörper (5, 18) nach außen ragende Kühlrippen oder entsprechende zur Wärmeabgabe optimierte Oberflächen (6, 17) aufweisen.

6. Vorrichtung nach einem der Ansprüche 1 bis 5, **dadurch gekennzeichnet, daß** die Kühlkörper (5, 18) unter einer den Computer abdeckenden Abdeckhaube (7) versteckt angeordnet sind, wobei sie über Lüftungskanäle und Austrittsöffnungen belüftet sind.

7. Vorrichtung nach einem der Ansprüche 1 bis 6, **dadurch gekennzeichnet, daß** der Gehäuseboden (13) perforiert ausgebildet ist und der Gehäusedeckel (14) schräggestellt und in Form einer schiefen Ebene angeordnet ist, so daß eine Luftströmung erzeugt wird, die durch an geeigneten Stellen angebrachte Geräteöffnungen (15) aus dem Gehäuse austritt.

8. Vorrichtung nach Anspruch 7, **dadurch gekennzeichnet, daß** die Stromversorgungsbaugruppe in der Luftströmung angeordnet ist.

9. Vorrichtung nach einem der Ansprüche 1 bis 8, **dadurch gekennzeichnet, daß** die Steckplätze zur Aufnahme der Erweiterungsbaugruppen (4) schräggestellt angeordnet sind, so daß entlang den in Form schiefer Ebenen verlaufenden Erweiterungsbaugruppen eine Luftströmung erzeugt wird, die durch an geeigneten Stellen angebrachte Geräteöffnungen (15) aus dem Gehäuse austritt.

10. Vorrichtung nach Anspruch 9, **dadurch gekennzeichnet, daß** die in Form von Steckkarten ausgebildeten Erweiterungsbaugruppen (4) in Steckplätzen einer senkrecht stehend angeordneten Steckkartenaufnahmeplatine (Platter) (3) befestigt sind.

11. Vorrichtung nach Anspruch 7 und 9, **dadurch gekennzeichnet, daß** die schiefen Ebenen, in welchen der Gehäusedeckel (14) und die als Steckkarten ausgebildeten Erweiterungsbaugruppen (4) verlaufen, zueinander parallel oder zumindest annähernd parallel sind.

12. Vorrichtung nach einem der Ansprüche 7 bis 11, **dadurch gekennzeichnet, daß** die für den Austritt der Luftströmungen vorgesehenen Geräteöffnungen (15) in zumindest einer der Außenwände des Gehäuses oder einer Abdeckhaube (7) angeordnet sind.

13. Vorrichtung nach einem der Ansprüche 1 bis 12, **dadurch gekennzeichnet, daß** die Laufwerke (9 bis 12) in einem Gesamtluftstrom angeordnet sind, so daß jedes einzelne dieser Laufwerke mit Hilfe von Kanälen ausreichend Luft erhält.

14. Vorrichtung nach Anspruch 13, **dadurch gekennzeichnet, daß** zumindest ein im Luftstrom positionierte Festplattenlaufwerk (9) in senkrecht stehender Stellung angeordnet ist.

15. Vorrichtung nach Anspruch 13 oder 14, **dadurch gekennzeichnet, daß** zumindest ein Festplattenlaufwerk (9) in schalldämmender Weise gekapselt ist.

16. Vorrichtung nach einem der Ansprüche 13 bis 15, **dadurch gekennzeichnet, daß** einzelne der Laufwerke noch zusätzlich an Zusatzluft-Kanälen liegen.

## Claims

1. Apparatus for cooling a personal computer which is accommodated in a casing and in a usual manner contains a system assembly (motherboard), a microprocessor module arranged on and connected to the system assembly, drives, a power-supply assembly and expansion assemblies which are in the form of plug-in cards, **characterized in that**
- the microprocessor module (2) has an assigned space defined on the system assembly (1) such that a thermally conductive connection can be established from the microprocessor module to a heat sink (5),
- the power components of the power-supply assembly (8) are arranged on a heat sink (18), and
- at least part of each of the heat sinks (5, 18) is part of an external wall of the casing.

2. Apparatus according to Claim 1, **characterized in that** the microprocessor module (2) is arranged at the edge of the system assembly (1).

3. Apparatus according to Claim 1 or 2, **characterized in that** the thermally conductive connection from the microprocessor module (2) to the heat sink (5) is a direct connection.

4. Apparatus according to Claim 1 or 2, **characterized in that** the thermally conductive connection from the microprocessor module (2) to the heat sink (5) is formed by a heat-transfer pipe (heatpipe).

5. Apparatus according to one of Claims 1 to 4, **characterized in that** the heat sinks (5, 18) have outwardly projecting cooling ribs or corresponding surfaces (6, 17) optimized for emitting heat.

6. Apparatus according to one of Claims 1 to 5, **characterized in that** the heat sinks (5, 18) are arranged so as to be hidden beneath a cover (7) which covers the computer, and they are ventilated by means of ventilation channels and exhaust openings.

7. Apparatus according to one of Claims 1 to 6, **characterized in that** the casing bottom (13) is of perforated design and the casing cover (14) is arranged at a slant and in the form of an inclined plane, so that an air stream is produced which emerges from the casing through appliance openings (15) made at suitable locations.

8. Apparatus according to Claim 7, **characterized in that** the power-supply assembly is arranged in the air stream.

9. Apparatus according to one of Claims 1 to 8, **characterized in that** the slots for holding the expansion assemblies (4) are arranged at a slant, so that an air stream emerging from the casing through appliance openings (15) made at suitable locations is produced along the expansion assemblies running in the form of inclined planes.

10. Apparatus according to Claim 9, **characterized in that** the expansion assemblies (4) in the form of plug-in cards are mounted in slots on a vertically arranged plug-in card mounting board (circuit board) (3).

11. Apparatus according to Claims 7 and 9, **characterized in that** the inclined planes in which the casing cover (14) and the expansion assemblies (4) in the form of plug-in cards run are parallel or at least approximately parallel to one another.

12. Apparatus according to one of Claims 7 to 11, **characterized in that** the appliance openings (15) provided for the emergence of the air streams are arranged in at least one of the external walls of the casing or of a shrouding cover (7).

13. Apparatus according to one of Claims 1 to 12, **characterized in that** the drives (9 to 12) are arranged in an overall air stream, so that every single one of these drives is provided with sufficient air with the aid of channels.

14. Apparatus according to Claim 13, **characterized in that** at least one hard-disk drive (9) positioned in the air stream is arranged in a vertical position.

15. Apparatus according to Claim 13 or 14, **characterized in that** at least one hard-disk drive (9) is encapsulated in a sound-absorbing manner.

16. Apparatus according to one of Claims 13 to 15, **characterized in that** some of the drives are additionally situated on supplementary-air channels.

## Revendications

1. Dispositif de refroidissement d'un ordinateur personnel logé dans un boîtier qui comporte à la manière habituelle un module de système (motherboard), un module de microprocesseur monté sur le module de système et raccordé à celui-ci, des dispositifs de lecture, un module d'alimentation en courant et des modules d'agrandissement constitués sous la forme de cartes à enficher, **caractérisé en ce que**:
- il est affecté au module (2) de microprocesseur sur le module (1) de système de manière définie une place telle qu'il est possible de ménager une liaison conductrice de la chaleur du module de microprocesseur à un radiateur (5),
- les composants de puissance du module (8) d'alimentation en courant sont disposés sur un radiateur (18) et
- les radiateurs (5, 18) font, au moins en partie, respectivement partie d'une paroi extérieure du boîtier.

2. Dispositif suivant la revendication 1, **caractérisé en ce que** le module (2) de microprocesseur est disposé au bord du module (1) de système.

3. Dispositif suivant la revendication 1 ou 2, **caractérisé en ce que** la liaison conductrice de la chaleur est une liaison directe allant du module (2) de microprocesseur au radiateur (5).

4. Dispositif suivant la revendication 1 ou 2, **caractérisé en ce que** la liaison conductrice de la chaleur allant du module (2) de microprocesseur au radiateur (5) est formée par un tube de transmission de la chaleur (heatpipe).

5. Dispositif suivant l'une des revendications 1 à 4, **caractérisé en ce que** les radiateurs (5, 18) ont des ailettes de refroidissement faisant saillie vers l'extérieur ou des surfaces (6, 17) correspondantes optimisées pour céder de la chaleur.

6. Dispositif suivant l'une des revendications 1 à 5, **caractérisé en ce que** les radiateurs (5, 18) sont cachés sous un capot (7) de recouvrement recouvrant l'ordinateur en étant aérés par des canaux d'aération et par des ouvertures de sortie.

7. Dispositif suivant l'une des revendications 1 à 6, **caractérisé en ce que** le fond (13) du boîtier est perforé et le couvercle (14) du boîtier est incliné et disposé sous la forme d'un plan incliné de sorte que soit produit un courant d'air qui sort du boîtier par des ouvertures (15) de l'appareil ménagées dans des endroits appropriés.

8. Dispositif suivant la revendication 7, **caractérisé en ce que** la module d'alimentation en courant est disposé dans le courant d'air.

9. Dispositif suivant l'une des revendications 1 à 8, **caractérisé en ce que** les emplacements d'enfichage servant à recevoir les modules d'agrandissement (4) sont disposés de manière inclinée de manière à produire un courant d'air le long des modules d'agrandissement s'étendant sous la forme de plans inclinés, courant d'air qui sort par des ouvertures (15) de l'appareil ménagées dans des endroits appropriés.

10. Dispositif suivant la revendication 9, **caractérisé en ce que** les modules (4) d'agrandissement, constitués sous la forme de cartes à enficher sont fixés dans des emplacements d'enfichage d'une platine (platter) (3) de réception de cartes à enficher disposée verticalement.

11. Dispositif suivant les revendications 7 et 9, **caractérisé en ce que** les plans inclinés dans lesquels s'étendent le couvercle (14) du boîtier et les modules (4) d'agrandissement constitués sous la forme de cartes à enficher sont parallèles entre eux ou au moins à peu près parallèles entre eux.

12. Dispositif suivant la revendication 7 à 11, **caractérisé en ce que** les ouvertures (15) de l'appareil, prévues pour la sortie des courants d'air, sont ménagées dans au moins l'une des parois extérieures du boîtier ou d'un capot (7) de recouvrement.

13. Dispositif selon l'une des revendications 1 à 12, **caractérisé en ce que** les dispositifs (9 à 12) de lecture sont disposés dans tout le courant d'air de sorte que chacun des dispositifs de lecture reçoit, à l'aide de canaux, suffisamment d'air.

14. Dispositif selon la revendication 13, **caractérisé en ce qu'**au moins un dispositif (9) de lecture de disque dur placé dans le courant d'air est disposé en position verticale.

15. Dispositif selon l'une des revendications 13 ou 14, **caractérisé en ce qu'**au moins un dispositif (9) de lecture de disque dur est encapsulé d'une manière amortissant le bruit.

16. Dispositif suivant l'une des revendications 13 à 15, **caractérisé en ce que** certains des dispositifs de lecture se trouvent encore en plus sur des canaux d'amenée d'air supplémentaires.
